# EUROPÄISCHE PATENTSCHRIFT

(11) **EP 3 124 811 B1**
(45) Veröffentlichungstag und Bekanntmachung des Hinweises auf die Patenterteilung: **08.12.2021**
(21) Anmeldenummer: 16172461.2
(22) Anmeldetag: 14.04.2011
(51) Int. Cl.: F16C 23/02, F16C 17/10, F03D 80/70

(54) **LAGERELEMENT**
BEARING ELEMENT
ÉLÉMENT DE PALIER

(30) Priorität: 14.04.2010 AT 5992010
(43) Veröffentlichungstag der Anmeldung: 01.02.2017
(62) Teilanmeldung aus: 11722706.6
(73) Patentinhaber: Miba Gleitlager Austria GmbH, 4663 Laakirchen (AT)
(72) Erfinder: KARI, Alexander, 5330 Fuschl am See (AT); FORSTNER, Christian, 4810 Gmunden (AT)
(74) Vertreter: Burger, Hannes

(56) Entgegenhaltungen:
- WO-A2-01/48376
- DE-A1- 10 043 936
- DE-A1- 10 255 745
- DE-U1- 20 208 133

## Beschreibung

Die Erfindung betrifft eine getriebelose Windkraftanlage umfassend einen Turm, an dessen Spitze eine Gondel angeordnet ist, in der eine Rotornabe angeordnet ist, die an ihrem einen Ende Rotorblätter trägt und deren anderes Ende zur Stromerzeugung ein Generator zugeordnet ist, wobei die Rotorwelle über ein Lagerelement drehbeweglich in der Gondel gelagert ist, wobei weiter das Lagerelement eine Gleitlagerung mit zwei in axialem Abstand angeordneten Gleitlagern und ein äußeres, drehbewegliches Ringelement und eine inneres, stationäres Ringelement umfasst, die beiden Gleitlager in zwei verschiedenen Ebenen angeordnet sind, die miteinander einen Winkel einschließen und zumindest eines der beiden Gleitlager Gleitlager-Pads umfasst.

Obwohl Gleitlager im Vergleich zu Wälzlager eine deutlich höhere Lebensdauer aufweisen, werden derzeit noch hauptsächlich Wälzlager in Windkraftanlagen verwendet, insbesondere auch als Hauptlager für die Rotorlagerung. Diverse Studien zu Windkraftanlagen zeigen, dass die Ausfallursache "Lager" neben diversen anderen Ausfallursachen, welche im Bereich des Generators oder der Rotorblätter selbst bzw. des Rotors insgesamt anzusiedeln sind, eine durchaus hohe Häufigkeit aufweist, angesiedelt im mittleren Drittel bezogen auf sämtliche Ausfallursachen. Im Vergleich zu anderen Ausfällen von Windkraftanlagen zeigt sich hinsichtlich der Kostenseite aber ein völlig anderes Bild, das nämlich Ausfälle in der Lagerung der Rotorwelle deutlich höhere Kosten sowie Stillstandzeiten verursachen als andere, üblicherweise auftretenden Ausfälle von Windkraftanlagen. Trotz der bewehrten Technologie "Wälzlager" führen Lagerausfälle insbesondere in der Multi-Megawattklasse zu einer deutlichen Reduzierung der Wirtschaftlichkeit von Windkraftanlagen bedingt durch die hohen Wartungskosten und Reparaturkosten bzw. durch die hohen Stillstandzeiten. Insbesondere bei so genannten Off-Shore-Anwendungen stellt dies aufgrund der schlechten Zugänglichkeit der Anlagen ein Problem dar, welches mit noch höheren Kosten verbunden ist. Begründet sind diese hohen Ausfallkosten bzw. Ausfallzeiten dadurch, dass bei einem Lagerausfall bei Verwendung von Wälzlagern in der Regel der gesamte Rotor ausgebaut werden muss.

Bedingt durch diese Problematik wurden im Stand der Technik vereinzelt bereits Gleitlageranwendungen in Windkraftanlagen beschrieben. So beschreibt zum Beispiel die DE 102 55 745 A1 eine Windenergieanlage mit einem an der Spitze eines Turms angeordneten Maschinenträger, mit einem an dem Maschinenträger befestigten Generatorstator, mit einer Rotorblätter tragenden Nabe und mit einem Generatorläufer, der an der Nabe befestigt ist, wobei der Generatorläufer oder die mit dem Generatorläufer verbundenen Nabe an einem Ort gelagert ist, der radial zwischen und/oder axial neben dem Generatorstator und dem Generatorläufer liegt und sich dabei auf dem Statorgehäuse abstützt. Die Lagerung kann mittels eines hydrostatisch ausgebildeten Gleitlagers erfolgen, wobei das Gleitlager als segmentiertes Gleitlager ausgebildet sein kann, das in die Polschuhe des Generators integriert ist. Es wird damit eine Verkürzung der mechanischen Lastpfade und eine Gewichtsreduktion der Windenergieanlage im Bereich der Anlagengondel im Turmkopf erreicht.

Des Weiteren wurden im Bereich von Übersetzungsgetrieben für Windgeneratoren Gleitlageranwendungen im Stand der Technik beschrieben, beispielsweise in der EP 1 184 567 A2. Es wird darin ein Getriebe für Windgeneratoren mit einem Rotor, der über eine mehrstufige Planetengetriebeanordnung und mindestens eine Stirnradstufe mit mindestens einem Generator in Antriebsverbindung steht, beschrieben. Der Rotor ist im Gehäuse des Getriebes gelagert, insbesondere in Gleitlagern geführt, wobei mindestens ein Lager Axialkräfte aufnehmen kann, und die Lager hydrostatisch anhebbar sind und durch gezielte Ansteuerung einer Öl-pumpe in einen Betrieb mit teil- oder vollhydrodynamischer Schmierung schaltbar sind.

Aus der DE 100 43 936 A1 ist ein Gleitlager für ein Turmdrehkranzlager einer Windkraftanlage bekannt, das einen Außenring und einen dazu konzentrisch angeordneten Innenring und Gleitbelagträger aufweist, wobei an den Gleitbelagträgern Gleitbeläge befestigt sind. Die Gleitbelagträger sind in radial verlaufenden Bohrungen des Innenringes angeordnet und greifen in eine umlaufende Nut auf der Innenseite des Außenringes ein. Es wird damit die Austauschbarkeit des Gleitlagers verbessert.

Die DE 10 2005 051 912 A1 wiederum beschreibt allgemein die Möglichkeit der Lagerung der Rotorblätter über Gleitlager.

WO 01/48376 A2 DE 202 08 133 U1 offenbaren weitere Beispiele von Windkraftanlagen.

Die Aufgabe der vorliegenden Erfindung besteht darin, eine verbesserte Gleitlagerung für die Rotornabe einer Windkraftanlage zur Verfügung zu stellen.

Diese Aufgabe der Erfindung wird bei der voranstehend genannten Windkraftanlage dadurch gelöst, dass gemäß Anspruch die Gleitlager-Pads an dem äußeren, drehbeweglichen Ringelement angeordnet sind, wobei das äußere Ringelement über eine Befestigungsanordnung mit der Rotornabe verbunden ist, wobei die Gleitlager-Pads in dem Gleitlager auf eine solche Weise angeordnet und verbunden sind, dass der Austausch einzelner Gleitlager-Pads möglich ist..

Von Vorteil ist dabei, dass durch die beiden beabstandeten Gleitlager eine bessere, radiale bzw. axiale Lagerung bzw. Führung der Rotornabe der Windkraftanlage erreicht wird. Darüber hinaus wird durch die beiden Gleitlager erreicht, dass die Gleitlagerung an sich höheren Belastungen ausgesetzt werden kann, wie diese insbesondere im so genannten Trudelbetrieb oder bei Start/Stopp-Zyklen von Windkraftanlagen auftreten können bzw. auch bei Windspitzen sowie wechselnden Windrichtungen auftreten. Überraschenderweise hat sich zudem herausgestellt, dass eine hydrostatische Anfahrunterstützung der Gleitlagerung nicht erforderlich ist, wodurch eine konstruktiv einfachere Lösung dieser Gleiterlagerung und damit eine entsprechende Kostenersparnis erzielbar ist.

Zumindest eines der Gleitlager ist durch in Umfangsrichtung nebeneinander angeordnete Gleitlager-Pads gebildet. Mit der Aufteilung der gesamten Lagerfläche auf einzelne Gleitlager-Pads wird erreicht, dass das Gleitlager an sich einfacher zu handhaben sind, sowohl hinsichtlich des Einbaus der Gleitlager-Pads als auch im Hinblick auf den Ausbau im Falle einer möglichen Störung der Lagerung. Zudem wird damit der Vorteil erreicht, dass bei einer durch die Lagerung verursachten Betriebsstörung der Windkraftanlage lediglich relativ kleine Einheiten ausgetauscht werden müssen, wodurch sich im Vergleich zu Wälzlagern oder im Vergleich zu Gleitlagerhalbschalen nicht nur die Stillstandszeiten durch reduzierte Wartungsarbeiten verringern lassen, sondern zudem auch die Wirtschaftlichkeit der Anlage durch Reduktion der Wartungskosten verbessern lässt, indem nämlich nur genau jene Bereiche der Gleitlagerung ausgetauscht werden müssen, in denen der Fehler aufgetreten ist, also nicht wie bei Gleitlagerhalbschalen eine vollständige Halbschale ausgetauscht werden muss wobei der Austausch insbesondere ohne Demontage des Rotors erfolgen kann. Selbstverständlich ist bei Bedarf aber der Austausch sämtlicher Gleitlager-Pads auch bei dieser Ausführungsvariante möglich.

Eine Verbesserung der Lagerfunktion wird erreicht, wenn die beiden Gleitlager in winkelig zueinander stehenden Ebenen angeordnet sind, da damit Kippmomente besser aufgenommen werden können.

Beispielweise ist dabei der Winkel, den die beiden Ebenen miteinander einschließen, ausgewählt aus einem Bereich mit einer unteren Grenze von 30° und einer oberen Grenze von 75°, insbesondere aus einem Bereich mit einer unteren Grenze von 35° und einer oberen Grenze von 60°. Es konnten damit die voranstehend beschriebenen Effekte betreffend die beiden winkelig zueinander stehenden Gleitlager weiter verbessert werden.

Gemäß der Erfindung eine einfache Möglichkeit zur Anordnung und Fixierung der Gleitlager-Pads wird erreicht, wenn das äußere Ringelement auf der den Gleitlager-Pads zugewandten Oberfläche Nuten aufweist und die Gleitlager-Pads teilweise in diesen Nuten angeordnet sind.

Eine weitere Verbesserung dieser Fixierung der Gleitlager-Pads wird erreicht, wenn die Nuten einen sich in Richtung auf einen Nutengrund sich erweiternden Querschnitt aufweisen, insbesondere einen schwalbenschwanzförmigen oder T-förmigen Querschnitt aufweisen, und die Gleitlager-Pads einen dazu entsprechenden Querschnitt aufweisen.

Für eine einfache Austauschbarkeit der Gleitlager-Pads ist es gemäß der Erfindung vorgesehen, dass die Gleitlager-Pads mit einem lösbaren Befestigungselement am äußeren Ringelement befestigt sind.

Gemäß der Erfindung ist vorgesehen, dass jeweils zwei in axialer Richtung nebeneinander angeordnete Gleitlager-Pads über ein gemeinsames Befestigungselement am äußeren Ringelement fixiert sind, wodurch sich einerseits der konstruktive Aufbau der Gleitlagerung an sich vereinfachen lässt und zudem auch Wartungsarbeiten in kürzerer Zeit durchgeführt werden können. Es wird damit auch die Einstellung der Gleitlagerung vereinfacht.

Weitere Ausführungsbeispiele sind in den abhängigen Ansprüche definiert.

Es ist durch das erfindungsgemäße Lagerelement möglich, die Windkraftanlage ausschließlich hydrodynamisch im Bereich der Lagerung zu betreiben, sodass auf konstruktive Maßnahmen zur Einhaltung eines bestimmten Mindestöldruckes, der üblicherweise bei hydrostatischen Anlagen mindestens 1 bar, normalerweise aber deutlich über 100 bar beträgt, verzichtet werden kann, sodass die Windkraftanlage an sich konstruktiv einfacher ausgebildet werden kann.

Gemäß einer Ausführungsvariante der Windkraftanlage ist vorgesehen, dass das innere Ringelement des Lagerelementes ein Teil der Rotorwelle und das äußere Ringelement ein Teil des Stators ist, wodurch sich wiederum der konstruktive Aufbau der Gleitlagerung vereinfachen lässt.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einer Windkraftanlage im Teilschnitt;
- Fig. 2: eine erste Ausführungsvariante eines Lagerelementes in Seitenansicht geschnitten;
- Fig. 3: ein Gleitlager-Pad in Schrägansicht;
- Fig. 4: einen Ausschnitt aus einer Anordnung von Gleitlager-Pads in Schrägansicht von unten;
- Fig. 5: einen Ausschnitt einer Gleitlagerung in Seitenansicht geschnitten;
- Fig. 6: einen Ausschnitt aus einer weiteren Ausführungsvariante einer Gleitlagerung in Seitenansicht geschnitten, die nicht zur beanspruchten Erfindung gehört;

- Fig. 7: ein Gleitlagersegment in Ansicht auf die Gleitfläche;
- Fig. 8: das Gleitlagersegment nach Fig. 7 in Schrägansicht auf den Rücken;
- Fig. 9: teilweise zwei Gleitlagersegmente mit dazwischen angeordnetem Keilelement.

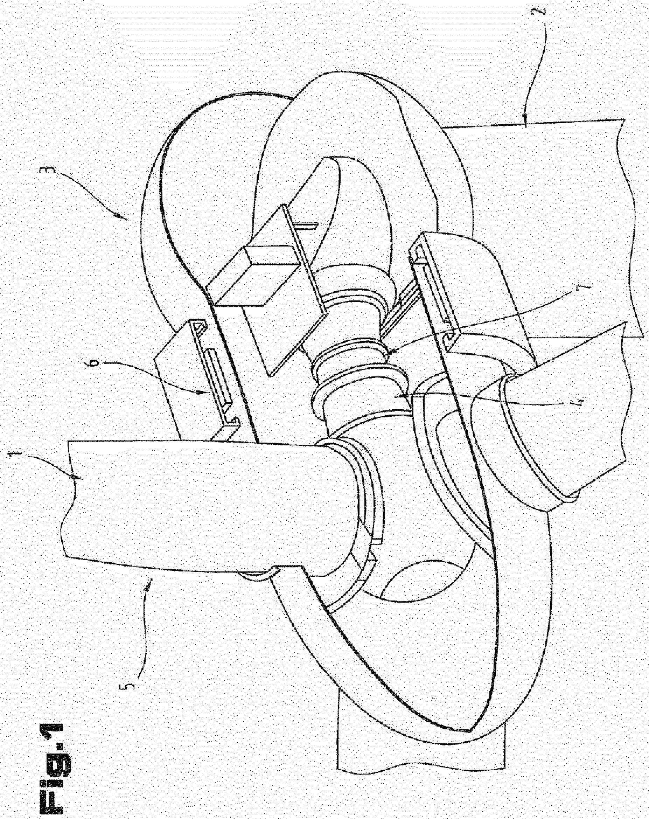

Fig. 1 zeigt in Schrägansicht und teilweise geschnitten einen Ausschnitt aus einer Windkraftanlage 1, wie sie im Prinzip aus dem Stand der Technik bekannt ist. Diese Windkraftanlage 1 umfasst einen Turm 2, an dessen Spitze eine Gondel 3, angeordnet ist. In dieser Gondel 3 ist eine Rotornabe 4 angeordnet, die an ihrem einen Ende Rotorblätter 5 trägt, insbesondere drehbeweglich. Dem anderen Ende ist zur Stromerzeugung ein Generator 6, der in diesem Fall als Ringgenerator ausgeführt ist, zugeordnet. Die Rotorwelle 4 ist über ein Lagerelement 7 drehbeweglich in der Gondel 3 gelagert. Das Lagerelement 7 ist das so genannte Hauptlager der Windkraftanlage 1.

Wie aus Fig. 1 ersichtlich ist, handelt es sich bei der Windkraftanlage 1 um eine getriebelose Ausführung, das heißt, dass zwischen dem Rotor selbst, das heißt den Rotorblättern 5, und dem Generator 6 kein Übersetzungsgetriebe vorhanden ist. Es handelt sich dabei um einen so genannten Langsamläufer. Zum Unterschied dazu sind aus dem Stand der Technik auch Windkraftanlagen bekannt, die zwischen dem Rotor und dem Generator ein Übersetzungsgetriebe, häufig ein Planetengetriebe, aufweisen, sodass der Rotor des Generators schneller läuft als die Rotornabe.

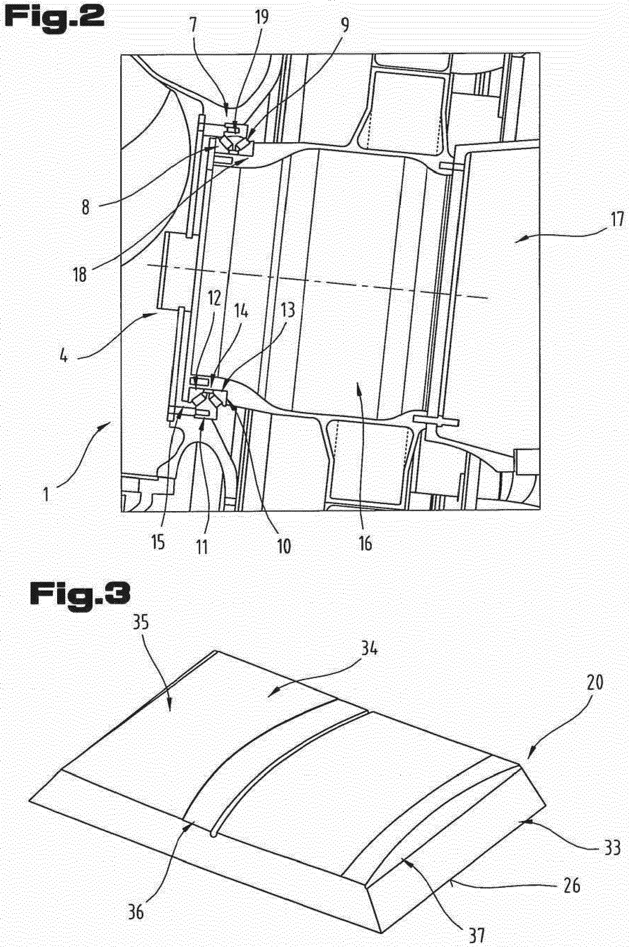

Die Fig. 2 bis 5 zeigen die Ausführungsvariante des erfindungsgemäßen Lagerelementes 7. Dabei ist in Fig. 2 ein Ausschnitt aus der Windkraftanlage 1 im Bereich der Rotornabe 4 gezeigt. Das Lagerelement 7 wird durch eine Gleitlagerung mit zwei in axialem Abstand zueinander angeordneten Gleitlagern 8, 9 gebildet bzw. umfasst diese. Mit axialem Abstand ist dabei die Richtung entlang der Längsmittelachse durch die Rotornabe 4 gemeint.

Neben den beiden Gleitlagern 8, 9 umfasst das Lagerelement 7 weiters ein inneres Ringelement 10, sowie ein äußeres Ringelement 11. Das innere Ringelement 10 ist zweigeteilt ausgeführt mit einem ersten Ring 12 und einen zweiten Ring 13, wobei zwischen den Ringen 12, 13 ein Abstandselement 14 angeordnet ist, sodass die beiden Ringe 12, 13 in axialer Richtung voneinander beabstandet sind.

Die Gleitlager 8, 9 sind zwischen diesen beiden Ringelementen 10, 11 angeordnet, wobei das äußere Ringelement 11 drehbeweglich ist und das innere Ringelement 10 stationär angeordnet ist, das heißt fixiert ist. Das äußere Ringelement 11 ist zudem über eine entsprechende Befestigungsanordnung 15 mit der Rotornabe 4 bzw. dem Rotor verbunden. Zur Befestigung des inneren Ringelementes 10, das heißt der beiden Ringe 12, 13, kann an einem Generator-Ständer 16, der an einem Maschinenträger 17 befestigt ist, eine Ringnut 18 in einer äußeren Oberfläche ausgebildet sein, in der das innere Ringelement 10 zumindest teilweise angeordnet, insbesondere fixiert ist.

Die beiden Gleitlager 8, 9 sind gemäß der Erfindung in zwei verschiedenen Ebenen angeordnet, die miteinander einen Winkel 19 einschließen. Der Winkel 19 kann dabei ausgewählt sein aus einem Bereich mit einer unteren Grenze von 30° und einer oberen Grenze von 75°, insbesondere aus einem Bereich mit einer unteren Grenze von 35 ° und einer oberen Grenze von 60 °. Durch die winkelige Anordnung der beiden Gleitlager 8, 9 können Kippmomente besser von dem Lagerelement 7 aufgenommen werden.

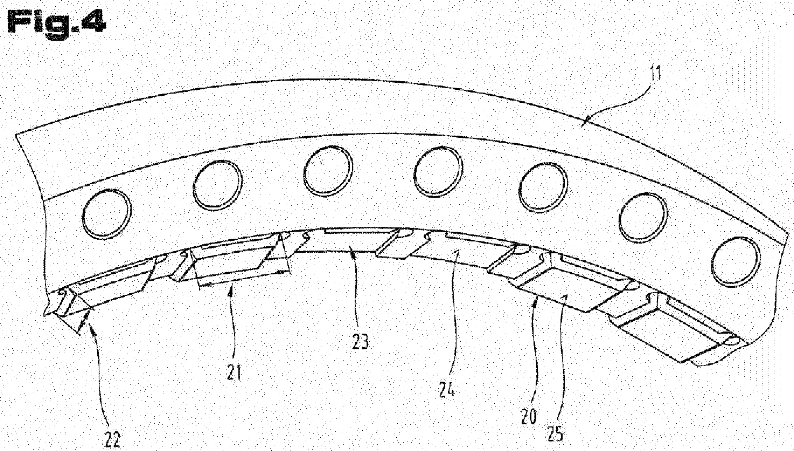

Wie aus den Fig. 3 und 4 ersichtlich ist, sind die beiden Gleitlager 8, 9 nach Fig. 2 durch Gleitlager-Pads 20 gebildet bzw. umfassen diese Gleitlager-Pads 20. Dabei sind in Umfangsrichtung um den Generator-Ständer 16 verteilt nebeneinander, insbesondere mit Abstand, mehrere dieser Gleitlager-Pads 20 angeordnet, um so die Lagerfläche auszubilden. Insbesondere ist dabei die Anzahl der Gleitlager-Pads 20 pro Gleitlager 8, 9 ausgewählt aus einem Bereich mit einer unteren Grenze von D/10 und einer oberen Grenze von D/2, wobei D in Zentimeter den maximalen Durchmesser des inneren Ringelementes 10 bezeichnet. Beispielsweise können also bei einem Lagerdurchmesser von 2,2 m 50 derartige Gleitlager-Pads 20 über den Umfang verteilt angeordnet sein.

Selbstverständlich richtet sich jedoch die Anzahl der Gleitlager-Pads 20 nach der Größe des Umfanges, sodass eine davon unterschiedliche Anzahl an Gleitlager-Pads 20 angeordnet sein kann. Diese Gleitlager-Pads 20 können beispielsweise eine Länge 21 in Umfangsrichtung von 122 mm sowie eine Breite 22 senkrecht dazu von 194 mm aufweisen. Beispielsweise können diese Gleitlager-Pads eine Größe in der Größe von DIN A5 bis DIN A4 aufweisen.

Es besteht auch die Möglichkeit, dass nur eines der Gleitlager 8, 9 mit derartigen Gleitlager-Pads 20 versehen ist.

Die Gleitlager-Pads 20 sind gemäß der Erfindung am äußeren Ringelement 11 befestigt. Dazu kann gemäß einer Ausführungsvariante vorgesehen sein, wie dies aus Fig. 4 ersichtlich ist, dass in diesem äußeren Ringelement 20 auf der den Gleitlager-Pads 20 zugewandten Oberfläche Nuten 23 angeordnet sind, in die die Gleitlager-Pads 20 eingeschoben werden können. Vorzugsweise weisen diese Nuten 23 einen sich von der Oberfläche in Richtung auf einen Nutengrund 24 erweiternden Querschnitt auf, insbesondere sind diese Nuten 23 im Querschnitt zumindest annährend schwalbenschwanzförmig oder T-förmig ausgebildet, wobei die Gleitlager-Pads 20 einen dazu komplementären Querschnittsverlauf aufweisen, also einen sich vergrößernden Querschnitt von einer Gleitoberfläche 25 in Richtung auf einen Gleitlager-Padrücken 26. Es wird damit zumindest ansatzweise eine Fixierung dieser Gleitlager-Pads 20 in radialer Richtung erreicht. Die Querschnittserweiterung kann dabei an allen Seitenwänden der Nuten 23 oder nur an einzelnen der Seitenwände, beispielsweise nur an der hinteren Seitenwand, ausgebildet sein.

Es besteht weiters die Möglichkeit, dass diese Nuten 23 in den Eckbereichen mit Rundungen versehen sind ― vorzugsweise mit Ausnahme der vorderen Eckbereiche, an denen die Gleitlager-Pads eingeschoben werden, wie dies ebenfalls auf Fig. 4 ersichtlich ist.

Die durch das innere Ringelement 10, das heißt die Ringe 12, 13, gebildete Gegenlauffläche, wird insbesondere durch Stahl gebildet, sodass also dieses Ringelement 10 aus Stahl geformt sein kann, ebenso wie das äußere Ringelement 11.

Die Befestigung der Gleitlager-Pads 20 am äußeren Ringelement 11, damit die Gleitlager-Pads 20 während des Betriebes besser gegen das Herausgleiten aus den Nuten 23 geschützt sind, kann über verschiedenste Methoden erfolgen, beispielsweise durch Schweißstellen, Lötstellen, jedoch erfindungsgemäß durch

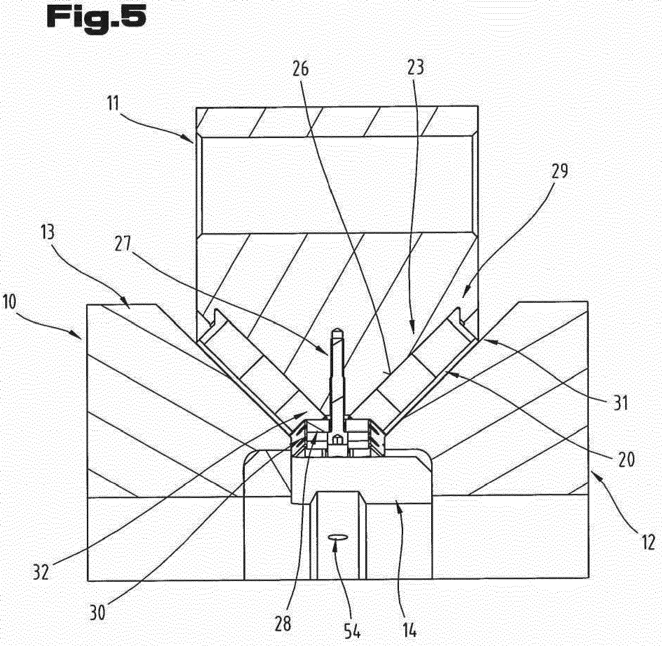

Klemmelemente, etc. Bevorzugt erfolgt die Befestigung allerdings, wie dies aus Fig. 5 ersichtlich ist, über ein lösbares Befestigungselement 27, insbesondere eine Schraube. Angemerkt sei, dass die Fig. 5 nochmals in einer größeren Darstellung das äußere Ringelement 11, das innere Ringelement 10, bestehend aus den beiden Ringen 12, 13, sowie das dazwischen angeordneten Abstandselement 14 zeigt.

Das Befestigungselement 27 kann durch eine Gewindeschraube gebildet sein, wobei die Gleitlager-Pads 20 über Beilagscheiben 28 vor dem Herausrutschen aus den Nuten 23 im äußeren Ringelement 11 gesichert sind. Dazu können die Gleitlager-Pads 20, wie dies in Fig. 5 dargestellt ist, im Bereich des Gleitlager-Padrückens 26 zumindest teilweise in in Richtung der Breite 22 einander gegenüberliegenden Endbereichen 29, 30 zumindest annährend keilförmig ausgebildet sein (in Richtung der Länge 21 betrachtet), wobei ein Keil 31 zur Fixierung des Gleitlager-Pads 20 in der Nut 23 des äußeren Ringelementes 11 dient, wozu diese Nut 23 eine dazu entsprechende, konträre Kontur aufweist, und ein weiterer Keil 32 an den Beilagscheiben 28 aufliegt. Es wird damit erreicht, dass durch die Schrägstellung der Gleitlager-Pads 20 und durch das Hineinschrauben des Befestigungselementes 27 das Gleitlager-Pad 20 in die Nut 23 des äußeren Ringelementes 11 hineingedrückt wird.

Wie insbesondere aus Fig. 5 ersichtlich ist, ist das Befestigungselement 27 - zumindest annähernd zentrisch in axialer Richtung betrachtet ― im äußeren Ringelement 11 angeordnet, sodass durch ein Befestigungselement 27 jeweils zwei einander gegenüberliegende Gleitlager-Pads 20 der beiden Gleitlager 8, 9 gehalten und fixiert werden können.

Die Gleitlager-Pads 20 weisen bevorzugt einen Mehrschichtaufbau auf, wie dies aus Fig. 3 ersichtlich ist und umfassen zumindest eine Stützschicht 33 sowie eine darauf angeordnete Gleitschicht 34. Gegebenenfalls können zwischen der Stützschicht 33 und der Gleitschicht 34 noch weitere Schichten angeordnet sein, beispielsweise eine Lagermetallschicht und/oder eine Bindeschicht bzw. eine Diffusionssperrschicht. Das ist jedoch nicht Teil der beanspruchten Erfindung.

Die Gleitschicht 34 ist bevorzugt zumindest im Oberflächenbereich unterbrochen ausgeführt, sodass mehrere, insbesondere zwei, Gleitschichtteilflächen 35 ausgebildet sind. Es wurde nämlich festgestellt, dass durch die geteilte Gleitschicht 34 eine bessere Lastverteilung auf diese erreicht werden kann.

Selbstverständlich ist es möglich, mehrere Unterteilungen vorzunehmen, insbesondere auch drei, vier, fünf oder sechs Gleitschichtteilflächen 35, je nach Abhängigkeit der Größe der Fläche der Gleitschicht 34, auszubilden.

Zwischen den Gleitschichtteilflächen 35 können Ausnehmungen 36, insbesondere Nuten, vorgesehen sein, die sich beispielsweise nur über einen Teil der Schichtdicke der Gleitschicht 34 oder über die gesamte Schichtdicke erstrecken können. Diese Nuten 36 können insbesondere als Ölzuführnuten verwendet werden.

Es ist außerhalb dem beanspruchten Gegenstand der Erfindung möglich, dass eine Stirnseite 37 zumindest der Gleitschicht 34 zumindest teilweise mit einer Rundung versehen ist, um damit einen besseren Öleinzug im Bereich der Gleitschicht 33, das heißt der Lauffläche der Gleitlager-Pads 20, zu erreichen. Wie insbesondere aus Fig. 4 ersichtlich ist, erstreckt sich diese Rundung im Bereich zumindest einer der Seitenwände der Nuten 23 im äußeren Ringelement 11, wobei gegebenenfalls beide Seitenbereich, das heißt beide Stirnseiten 37, die einander gegenüberliegen und an den Seitenwänden der Nut anliegen, zumindest der Gleitschicht 34 mit einer derartigen Rundung versehen sein können, sodass die Gleitschicht 33 in Draufsicht eine hyperbelartigen Außenkontur aufweist und damit ein Mittenbereich der Gleitschicht 34 weiter von der Seitenwand der Nuten 23 entfernt ist als ein Eckbereich.

Selbstverständlich ist die Oberfläche der Gleitlager-Pads 20 ebenfalls gerundet ausgeführt sein, das heißt die Oberfläche zumindest der Gleitschicht 34 entsprechend an die Rundung des inneren Ringelementes 10 angepasst.

Insbesondere besteht die Gleitschicht 34 aus einem relativ harten Gleitlagerwerkstoff mit einer Härte von zumindest 75 HV (0,001), insbesondere von zumindest 100 HV (0,001), zumindest an der Gleitschichtoberfläche 35. Beispielsweise kann die Gleitschicht aus einem Werkstoff gebildet sein, ausgewählt aus einer Gruppe umfassend Aluminiumbasislegierungen, wie AlSn20Cu, AlZn4Si3, Silberbasislegierungen oder Kupferbasislegierungen, gegebenenfalls jeweils mit Bismut, Bismutbasislegierungen.

Wie bereits voranstehend bereits erwähnt, kann die Gleitschicht 34 auch durch einen Gleitlack gebildet sein, wobei in diesem Fall die Gleitschicht 34 eine Härte zwischen 25 HV (0,001) bis 60 HV (0,001) aufweist.

Als Gleitlacke können zum Beispiel verwendet werden Polytetrafluorethylen, fluorhältige Harze, wie z.B. Perfluoralkoxy-Copolymere, Polyfluoralkoxy-Polytetrafluorethylen-Copolymere, Ethylen-tetrafluorethylen, Polychlortrifluorethylen, fluorierte Ethylen-Propylen Copolymere, Polyvinylfluorid, Polyvinylidenfluorid, alternierende Copolymere, statistische Copolymere, wie z.B. Perfluorethylenpropylen, Polyesterimide, Bismaleimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikone, Polyarylether, Polyarylketone, Polyaryletherketone, Polyaryletheretherketone, Polyetheretherketone, Polyetherketone, Polyvinylidendiflouride, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide, sowie Copolymere daraus.

Bevorzugt wird ein Gleitlack der in trockenem Zustand aus 40 Gew.-% bis 45 Gew.-% MoS2, 20 Gew.-% bis 25 Gew.-% Graphit und 30 Gew.-% bis 40 Gew.-% Polyamidimid besteht, wobei gegebenenfalls noch Hartpartikel, wie z.B. Oxide, Nitride oder Carbide, im dem Gleitlack in einem Anteil von in Summe maximal 20 Gew.-% enthalten sein können, die einen Anteil der Festschmierstoffe ersetzen.

Die Stützschicht 33 kann beispielsweise durch Stahl oder eine Kupferbasislegierung, insbesondere mit Zink, beispielsweise CuZn31Si, CuSnZn, eine AlZn- oder eine CuAl-Legierung gebildet sein.

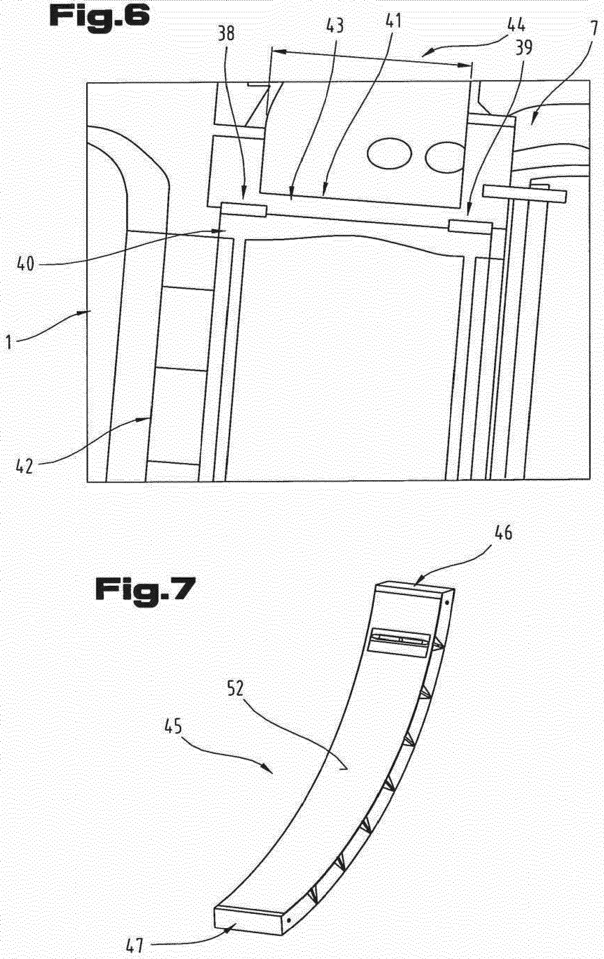

Die Fig. 6 bis 8 zeigen eine andere Beispiele des Lagerelementes 7 für eine Windkraftanlage, die nicht zur beanspruchten Erfindung gehören. . Wiederum besteht das Lagerelement 7 aus zwei in axialem Abstand zueinander angeordneten Gleitlagern 38, 39 die zwischen einem inneren Ringelement 40 und einem äußeren Ringelement 41 angeordnet sind. Dabei ist das innere Ringelement 40 ein Teil einer Rotornabe 42 und das äußere Ringelement 41 ein Teil eines Stators 43 der Windkraftanlage 1. Anders als bei voranstehend beschriebener Ausführungsvariante der Erfindung, ist das innere Ringelement 40 drehbeweglich und das äußere Ringelement 41 fixiert angeordnet.

Die beiden Gleitlager 38, 39 sind anders als in der beanspruchten Erfindung in einer Ebene angeordnet, wobei es selbstverständlich möglich ist, dass diese beiden Gleitlager 38, 39 auch in zwei winkelig zueinander stehenden Ebenen angeordnet werden.

Bevorzugt sind diese beiden Gleitlager 38,39 aber relativ weit voneinander beabstandet, wobei ein Abstand 44 zwischen den beiden Gleitlagern 38, 39, gemessen zwischen den aufeinander zuweisenden Stirnflächen in Umfangsrichtung der Gleitlager 38, 39, zumindest 40 %, insbesondere zumindest 50 %, einer maximalen Umfangslänge des inneren Ringelementes 40 beträgt. Durch diese weite Beabstandung der beiden Gleitlager 38, 39 ist es möglich, dass das Lagerelement 7 höheren Belastungen ausgesetzt werden kann, insbesondere können damit am Rotor wirkende Kippmomente besser aufgenommen werden.

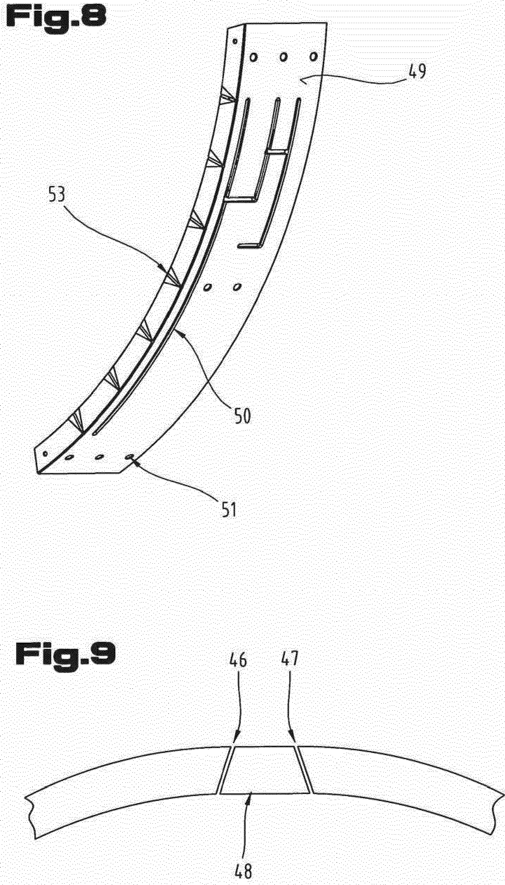

Bevorzugt sind die beiden Gleitlager 38, 39 als Gleitlagersegmente 45 ausgebildet, wie dies aus den Fig. 7 und 8 ersichtlich ist, sodass über den Umfang des inneren Ringelementes 40 mehrere Gleitlagersegmente 45 ein Gleitlager 38 bzw. 39 bilden. Zur Befestigung der Gleitlagersegmente 45 am Stator 43 können wiederum unterschiedlichste Verfahren und Methoden eingesetzt werden, wie bereits voranstehend beschrieben, wobei die Gleitlagersegmente 45 an Stirnflächen 46, 47 abgeschrägt sind und zwischen den Gleitlagersegmenten 45 zu deren Vorspannung bzw. Befestigung ein Keilelement 48 angeordnet wird, wie dies aus Fig. 9 ersichtlich ist, wobei über dieses Keilelement 48 die Gleitlagersegmente 45 gegen die innere Oberfläche des äußeren Ringelementes 41 gepresst werden.

Zur Anordnung der beiden Gleitlager 38, 39 zwischen dem inneren Ringelement 40 und dem äußeren Ringelement 41 besteht auch bei dieser Ausführungsvariante die Möglichkeit, im inneren Ringelement 40, das heißt an einer dem äußeren Ringelement zugewandten Oberfläche des inneren Ringelementes 40 und/oder an einer dem inneren Ringelement 40 zugewandten Oberfläche des äußeren Ringelementes 41 eine Nut vorzusehen.

Die Gleitlager-Pads 20 können über den Stator im Bereich einer Olzuführung 54, wie dies in Fig. 5 dargestellt ist, entfernt werden. Dazu wird lediglich das Befestigungselement 27 gelöst und gegebenenfalls entfernt, ebenso wie das Abstandselement 14. In Folge dessen können diese Gleitlager-Pads 20 jeweils schräg nach unten aus den Nuten 23 herausgezogen werden. Der Einbau bzw. Austausch dieser Gleitlager-Pads 20 kann in genau umgekehrter Reihenfolge erfolgen.

Es ist also bei sämtlichen Ausführungsvarianten der Erfindung möglich, nur einzelne Teile der Gleitlager 8, 9 auszutauschen, sodass also nicht wie bei einem Wälzlager das gesamte Lagerelement 7 bzw. das gesamte Wälzlager ausgetauscht werden muss. Die Ausführungsform nach den Fig. 2 bis 5 hat zudem den Vorteil, dass dieses Lagerelement 7 ein Schrägrollenwälzlager, wie diese derzeit als Hauptlager zur Rotorlagerung eingesetzt werden, ersetzten kann, sodass also derartige Lagerelemente 7 im Zuge von Wartungsarbeiten auch die bislang verwendeten Wälzlager bei bestehenden Anlagen ersetzten können.

Die Ausführungsbeispiele zeigen mögliche Ausführungsvarianten des Lagerelementes 7, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch weitere Ausführungsvarianten, die durch Kombinationen einzelner Details der dargestellten und beschriebenen Ausführungsvariante möglich sind, vom Schutzumfang im Rahmen der Ansprüche mit umfasst.

Der Ordnung halber sei abschließend darauf hingewiesen, dass zum besseren Verständnis des Aufbaus des Lagerelementes 7 dieses bzw. dessen Bestandteile teilweise unmaßstäblich und/oder vergrößert und/oder verkleinert dargestellt wurden.

### Bezugszeichenaufstellung

| | | | |
|---|---|---|---|
| 1 | Windkraftanlage | 42 | Rotornabe |
| 2 | Turm | 43 | Stator |
| 3 | Gondel | 44 | Abstand |
| 4 | Rotornabe | 45 | Gleitlagersegment |
| 5 | Rotorblatt | | |
| | | 46 | Stirnfläche |
| 6 | Generator | 47 | Stirnfläche |
| 7 | Lagerelement | 48 | Keilelement |
| 8 | Gleitlager | 49 | Segmentrücken |
| 9 | Gleitlager | 50 | Nut |
| 10 | Ringelement | | |
| | | 51 | Bohrung |
| 11 | Ringelement | 52 | Gleitfläche |
| 12 | Ring | 53 | Ausnehmung |
| 13 | Ring | 54 | Ölzuführung |
| 14 | Abstandselement | | |
| 15 | Befestigungsanordnung | | |
| 16 | Generator-Ständer | | |
| 17 | Maschinenträger | | |
| 18 | Ringnut | | |
| 19 | Winkel | | |
| 20 | Gleitlager-Pad | | |
| 21 | Länge | | |
| 22 | Breite | | |
| 23 | Nut | | |
| 24 | Nutengrund | | |
| 25 | Gleitfläche | | |
| 26 | Gleitlager-Padrücken | | |
| 27 | Befestigungselement | | |
| 28 | Beilagscheibe | | |
| 29 | Endbereich | | |
| 30 | Endbereich | | |
| 31 | Keil | | |
| 32 | Keil | | |
| 33 | Stützschicht | | |
| 34 | Gleitschicht | | |
| 35 | Gleitschichtteilfläche | | |
| 36 | Nut | | |
| 37 | Stirnseite | | |
| 38 | Gleitlager | | |
| 39 | Gleitlager | | |
| 40 | Ringelement | | |
| 41 | Ringelement | | |

## Patentansprüche

1. Getriebelose Windkraftanlage (1)
- umfassend einen Turm (2), an dessen Spitze eine Gondel (3) angeordnet ist, in der eine Rotornabe (4) angeordnet ist, die an ihrem einen Ende Rotorblätter (5) trägt und deren anderes Ende zur Stromerzeugung ein Generator (6) zugeordnet ist, wobei die Rotornabe (4) über ein Lagerelement (7) drehbeweglich in der Gondel (3) gelagert ist,
- wobei weiter das Lagerelement (7) eine Gleitlagerung mit Gleitlager-Pads (20) ist, die ein äußeres, drehbewegliches Ringelement (10) und eine inneres, stationäres Ringelement (11) umfasst,
**dadurch gekennzeichnet, dass**
- die Gleitlagerung zwei in axialem Abstand angeordnete Gleitlager (8, 9) umfasst,
- die beiden Gleitlager (8, 9) in zwei verschiedenen Ebenen angeordnet sind, die miteinander einen Winkel (19) einschließen,
- zumindest eines der beiden Gleitlager (8, 9) die Gleitlager-Pads (20) umfasst,
- die Gleitlager-Pads (20) an dem äußeren, drehbeweglichen Ringelement (10) angeordnet sind, wobei das äußere Ringelement (10) über eine Befestigungsanordnung (15) mit der Rotornabe (5) verbunden ist,
- wobei die Gleitlager-Pads (20) in dem Gleitlager auf eine solche Weise angeordnet und verbunden sind, dass der Austausch einzelner Gleitlager-Pads (20) möglich ist, wozu das äußere Ringelement (11) auf der den Gleitlager-Pads (20) zugewandten Oberfläche Nuten (23) aufweist und die Gleitlager-Pads teilweise in diesen Nuten (23) angeordnet sind, und die Gleitlager-Pads (20) mit einem lösbaren ,gemeinsamen Befestigungselement (27) am äußeren Ringelement (11) befestigt sind, oder dass die Gleitlager-Pads (20) am äußeren Ringelement (11) mittels Klemmelementen befestigt sind.

2. Windkraftanlage (7) nach Anspruch 1, **dadurch gekennzeichnet, dass** die beiden Gleitlager (8, 9) in axialer Richtung betrachtet entgegengesetzt geneigt sind.

3. Windkraftanlage (7) nach Anspruch 1 oder 2, **dadurch gekennzeichnet, dass** das innere Ringelement (40) des Lagerelementes (7) einen Teil der Rotornabe (4) und das äußere Ringelement (41) einen Teil des Stators bilden.

4. Windkraftanlage (1) nach einem der Ansprüche 1 bis 3, **dadurch gekennzeichnet, dass** das Lagerelement (7) ausschließlich hydrodynamisch betreibbar ist.

5. Windkraftanlage nach Anspruch 1, **dadurch gekennzeichnet, dass** die Nuten (23) einen sich in Richtung auf einen Nutengrund sich erweiternden Querschnitt aufweisen.

6. Windkraftanlage nach Anspruch 1, **dadurch gekennzeichnet, dass** jeweils zwei in axialer Richtung nebeneinander angeordnete Gleitlager-Pads (20) über ein gemeinsames Befestigungselement (27) am äußeren Ringelement (11) fixiert sind.

## Claims

1. A gearless wind turbine (1)
comprising a tower (2) at the top of which a nacelle (3) is arranged, in which a rotor hub (4) is arranged, which carries rotor blades (5) at its one end and the other end of which is assigned to a generator (6) for power generation, wherein the rotor hub (4) is mounted in the nacelle (3) in a rotationally movable manner via a bearing element (7),
- wherein further the bearing element (7) is a sliding bearing with sliding bearing pads (20) comprising an outer, rotationally movable ring element (10) and an inner, stationary ring element (11),
**characterized in that**
- the sliding bearing comprises two plain bearings (8, 9) arranged at an axial distance,
- the two plain bearings (8, 9) are arranged in two different planes, which enclose an angle (19) together,
- at least one of the two plain bearings (8, 9) comprises the sliding bearing pads (20),
- the sliding bearing pads (20) are arranged on the outer, rotationally movable ring element (10), wherein the outer ring element (10) is connected to the rotor hub (5) via a fastening arrangement (15),
- wherein the sliding bearing pads (20) in the sliding bearing are arranged and connected such that the exchange of individual sliding bearing pads (20) is possible, the outer ring element (11) having grooves (23) on the side facing the sliding bearing pads (20) and the sliding bearing pads being partially arranged within said grooves (23) for this purpose,
and the sliding bearing pads (20) being fastened to the outer ring element (11) by a releasable, common fastening element (27),
or that the sliding bearing pads (20) are fastened to the outer ring element (11) by means of clamping elements.

2. The wind turbine (7) according to claim 1, **characterized in that** the two plain bearings (8, 9) are tilted in opposite directions as seen in the axial direction.

3. The wind turbine (7) according to claim 1 or 2, **characterized in that** the inner ring element (40) of the bearing element (7) forms a part of the rotor hub (4) and the outer ring element (41) forms a part of the stator.

4. The wind turbine (1) according to one of claims 1 to 3, **characterized in that** the bearing element (7) may be operated exclusively hydrodynamically.

5. The wind turbine according to claim 1, **characterized in that** the grooves (23) have a cross-section extending in the direction towards a groove base.

6. The wind turbine according to claim 1, **characterized in that**, in each case, two sliding bearing pads (20) arranged next to one another in the axial direction are fixed to the outer ring element (11) via a common fastening element (27).

## Revendications

1. Éolienne sans engrenage (1)
― comprenant une tour (2) à la pointe de laquelle est disposée une gondole (3) dans laquelle est disposé un moyeu de rotor (4), qui supporte, à une de ses extrémités, des pales de rotor (5) et qui comprend, à son autre extrémité, pour la production de courant, un générateur (6), dans lequel le moyeu de rotor (4) est logé de manière rotative dans la gondole (3) par l'intermédiaire d'un élément de palier (7),
― dans lequel, en outre, l'élément de palier (7) est un logement lisse avec des coussinets de palier lisse (20), qui comprend un élément annulaire externe rotatif (10) et élément annulaire interne stationnaire (11),
**caractérisée en ce que**
― le logement lisse comprend deux paliers lisses (8, 9) disposés à une distance axiale,
― les deux paliers lisses (8, 9) sont disposés sur deux plans différents qui forment entre eux un angle (19),
― au moins un des deux paliers lisses (8, 9) comprend les coussinets de palier lisse (20),
― les coussinets de palier lisse (20) sont disposés sur l'élément annulaire externe rotatif (10), dans lequel l'élément annulaire externe rotatif (10) est relié avec le moyeu de rotor (5) par l'intermédiaire d'un dispositif de fixation (15),
― dans lequel les coussinets de palier lisse (20) sont disposés dans le palier lisse et reliés de façon à ce que le remplacement de certains coussinets de palier lisse (20) soit possible, l'élément annulaire externe (11) comprenant pour cela, sur la surface orientée vers les coussinets de palier lisse (20), des rainures (23) et les coussinets de palier lisse sont disposés partiellement dans ces rainures (23),
et les coussinets de palier lisse (20) sont fixés avec un élément de fixation (27) amovible commun sur l'élément annulaire externe (11),
ou les coussinets de palier lisse (20) sont fixés sur l'élément annulaire externe (11) au moyen d'éléments de serrage.

2. Éolienne (7) selon la revendication 1, **caractérisée en ce que** les deux paliers lisses (8, 9) sont inclinés de manière opposée, vus dans la direction axiale.

3. Éolienne (7) selon la revendication 1 ou 2, **caractérisée en ce que** l'élément annulaire interne (40) de l'élément de palier (7) constitue une partie du moyeu du rotor (4) et l'élément annulaire externe (41) constitue une partie du stator.

4. Éolienne (1) selon l'une des revendications 1 à 3, **caractérisée en ce que** l'élément de palier (7) peut fonctionner exclusivement de manière hydrodynamique.

5. Éolienne selon la revendication 1, **caractérisée en ce que** les rainures (23) présentent une section qui s'élargit en direction du fond des rainures.

6. Éolienne selon la revendication 1, **caractérisée en ce que** deux coussinets de palier lisse (20), disposés l'un à côté de l'autre dans la direction axiale, sont fixés par l'intermédiaire d'un élément de fixation commun (27) à l'élément annulaire externe (11).
